# EUROPEAN PATENT SPECIFICATION

(11) **EP 2 429 017 B1**
(45) Date of publication and mention of the grant of the patent: **08.01.2014**
(21) Application number: 11191758.9
(22) Date of filing: 01.11.2010
(51) Int. Cl.: H01M 2/22, H01M 2/34, H01M 10/42

(54) **Secondary battery**
Sekundärbatterie
Batterie secondaire

(30) Priority: 02.11.2009 US 257417 P; 22.10.2010 US 910266
(43) Date of publication of application: 14.03.2012
(62) Divisional of application: 10189600.9
(73) Proprietor: Samsung SDI Co., Ltd., Yongin-si, Gyeonggi-do (KR)
(72) Inventor: Ahn, Changbum, Gyeonggi-do (KR)
(74) Representative: Walaski, Jan Filip

(56) References cited:
- JP-A- 2002 008 629
- JP-A- 2005 044 523
- US-B1- 6 524 741

## Description

The present invention relates to a secondary battery.

Unlike non-chargeable primary batteries, secondary batteries are rechargeable and are widely used in various electronic devices such as cellular phones, laptop computers, and camcorders.

Among various kinds of secondary batteries, lithium secondary batteries are widely used owing to their high operational voltages and high energy density per unit weight. Lithium secondary batteries are manufactured into various shapes such as prismatic shapes, cylindrical shapes, and pouch shapes.

A lithium secondary battery includes: an electrode assembly having a positive electrode plate and a negative electrode plate; and an electrolyte that can interact with the electrode assembly electrochemically for charging and discharging.

The internal gas pressure of a secondary battery can be excessively increased due to overcharging, over-discharging, an internal short circuit, and overheating. In this case, the secondary battery may not be normally charged/discharged but behave abnormally. In addition, a case of the secondary battery may swell due to its internal gas pressure.

Embodiments of the invention are directed to a secondary battery capable of turning off a circuit by making use of a swelling phenomenon in a way different from that used in the related art.

Other embodiments are directed to a secondary battery capable of turning off a circuit when swelling arises by structurally breaking the electric connection between an electrode assembly and a lead tab.

The secondary battery may be configured so that the electrode terminal and the lead tab can be separated by the deformation of the pouch case that swells due to a gas pressure increase.

Therefore, when swelling arises, the electric connection between the electrode assembly and the lead tab can be structurally broken, to that the secondary battery can be used more reliably.

JP 2002 008629, JP 2005 044523 and US 6 524 741 disclose secondary batteries in which an increase in gas pressure leads to separation of the electrode tab and terminal.

According to the invention, there is provided a secondary battery according to claim 1. Preferred features are claimed in the dependent claims.

Embodiments of the invention will now be described by way of example with reference to the accompanying drawings, in which:
FIG. 1 is an assembled perspective view illustrating a battery pack according to an embodiment of the invention.
FIG. 2 is a perspective view illustrating one of a plurality of secondary batteries of the battery pack of FIG. 1.
FIG. 3 is a sectional view taken along line III-III of FIG. 2.
FIG. 4 is an exploded perspective view illustrating a connection part of FIG. 3.
FIG. 5 is a sectional view for explaining variations of the secondary battery of FIG. 3 when the secondary battery swells.
FIG. 6 is a simplified schematic view illustrating the variations depicted in FIG. 5.
FIG. 7 is a perspective view for explaining a welding method between a positive terminal and a first lead tab.
FIG. 8 is a sectional view illustrating a coupling structure between a positive terminal and a first lead tab according to one arrangement.
FIG. 9 is a perspective view illustrating the positive terminal of FIG. 8.
FIG. 10 is a perspective view illustrating a positive terminal according to another arrangement.
FIG. 11 is a sectional view illustrating a coupling structure between a positive terminal and a first lead tab according to an embodiment of the invention.

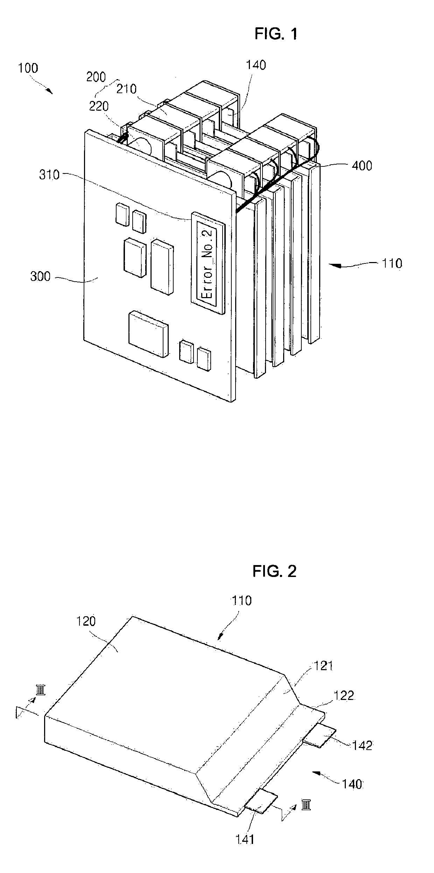

FIG. 1 is an assembled perspective view illustrating a battery pack 100 according to an embodiment.

Referring to FIG. 1, the battery pack 100 may include a plurality of secondary batteries 110, a connection part 200, a circuit board 300, and a detecting device 400. The secondary batteries 110 are stacked in a manner such that main surfaces of the secondary batteries 110 face each other. The charge/discharge capacity of the battery pack 100 increases in proportion to the number of the secondary batteries 110. The battery pack 100 may be used for a large apparatus such as a hybrid vehicle requiring a high battery capacity rather than a small apparatus such as a cellular phone to which power can be sufficiently supplied by using only one secondary battery 110. The secondary batteries 110 include exposed lead tabs 140, also referred to herein as electrode tabs.

The connection part 200 electrically connects the lead tabs 140 having the same polarity. The connection part 200 may include connection plates 210 disposed between the neighbouring secondary batteries 110, and a connection bar 220 connected to the outermost one of the connection plates 210. The connection part 200 may be formed of a conductive metal such as copper, nickel, and aluminum that have good electric conductivity.

The circuit board 300 is used to control the charging and discharging operations of the secondary batteries 110, and only one circuit board 300 may be provided for the plurality of secondary batteries 110. The circuit board 300 may be electrically connected to the secondary batteries 110 through the connection bar 220. Since the secondary batteries 110 are controlled by the single circuit board 300, the battery pack 100 can have a simple structure as compared with the case where the circuits are provided for the respective secondary batteries 110.

The circuit board 300 is connected to the detecting device 400, which is inserted in the respective lead tabs 140 or coupled to the outsides of the lead tabs 140. For example, the detecting device 400 may be a wire through which voltage variations of the secondary batteries 110 can be detected by the circuit board 300. The circuit board 300 may include an additional display 310. The display 310 may output information measured through the detecting device 400. Information output on the display 310 may be mainly referred to when the battery pack 100 is tested.

FIG. 2 is a perspective view illustrating one of the secondary batteries 110 of the battery pack 100 illustrated in FIG. 1.

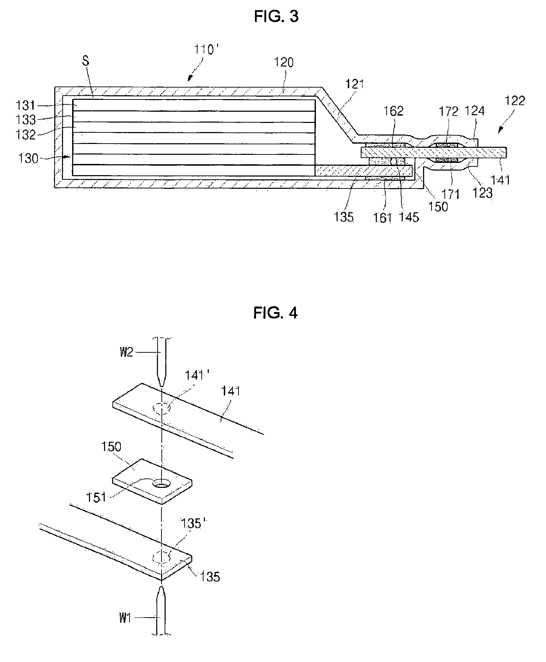

Referring to FIG. 2, the secondary battery 110 includes a case 120, for example a pouch case, an electrode assembly 130 (refer to FIG. 3), and a lead tab 140.

The pouch case 120 may have an approximately rectangular parallelepiped shape. The pouch case 120 is formed of a thin plate made of a metal such as aluminum. If opposing surfaces of the thin plate are coated with a resin, the pouch case 120 may be electrically insulated from objects making contact with the coated surfaces.

One side of the pouch case 120 may be sloped to form a sloped surface 121. An end region or sealing part 122 extends from the sloped surface 121 to cover or clamp the lead tab 140.

The electrode assembly 130 is accommodated together with electrolyte in an inner space (S) (refer to FIG. 3) formed by the pouch case 120. An end of the lead tab 140 is connected to the electrode assembly 130, and the other end of the lead tab 140 is exposed to the outside of the pouch case 120.

The lead tab 140 includes a first lead tab 141 and a second lead tab 142 that are spaced apart from each other in the width direction of the sealing part 122. The first lead tab 141 may be electrically connected to a positive or negative electrode plate and may be positive or negative electrically. The second lead tab 142 may be electrically connected to a negative or positive electrode plate and may have a polarity electrically opposite to that of the first lead tab 141.

FIG. 3 is a sectional view taken along line III-III of FIG. 2.

Referring to FIG. 3, the electrode assembly 130 includes a positive electrode plate 131, a negative electrode plate 132, and a separator 133 disposed between the positive electrode plate 131 and the negative electrode plate 132.

The positive electrode plate 131 is formed by coating a positive electrode collector with a positive electrode coating portion, and the negative electrode plate 132 is formed by coating a negative electrode collector with a negative electrode coating portion.

The positive electrode collector of the positive electrode plate 131 is formed of a conductive metal so that electrons can be collected from the positive electrode coating portion to the positive electrode collector and then transferred to an external circuit when the secondary battery 110 is charged. The positive electrode coating portion is prepared by mixing a positive electrode active material, a conductive material, and a binder and is coated on the positive electrode collector to a predetermined thickness.

The negative electrode collector of the negative electrode plate 132 is formed of a conductive metal so that electrons can be collected from the negative electrode coating portion to the positive electrode collector and then transferred to an external circuit when the secondary battery 110 is discharged. The negative electrode coating portion is prepared by mixing a negative electrode active material, a conductive material, and a binder and is coated on the negative electrode collector to a predetermined thickness.

The separator 133 is form of an insulating material so that the positive electrode plate 131 and the negative electrode plate 132 can be electrically insulated from each other.

The positive electrode plate 131, the separator 133, and the negative electrode plate 132 are disposed in the accommodation space (S) of the electrode assembly 130 in a state where the positive electrode plate 131, the separator 133, and the negative electrode plate 132 are sequentially stacked or they are sequentially stacked and wound in a jelly roll shape. Then, electrolyte is injected into the accommodation space (S) to impregnate the electrode assembly 130 with the electrolyte.

A conductive positive terminal 135 extends form the positive electrode plate 131 of the electrode assembly 130. The positive terminal 135 is formed of a material having a resistance of about 10 mΩ or lower so that a current level required by a middle-capacity or large-capacity battery can flow through the positive terminal 135. The positive terminal 135 is connected to the conductive first lead tab 141. The positive terminal 135 and the first lead tab 141 are electrically connected through a conductive connection part 145.

As two parts of the pouch case 120 forming the sealing part 122, that is, a case lower part 123 and a case upper part 124, are sealed, the first lead tab 141 is covered by the parts 123 and 124. By sealing the two parts 123 and 124, the inner space (S) can be sealed in a state where the electrode assembly 130 and electrolyte are accommodated in the inner space (S).

The first lead tab 141 is located higher than the positive terminal 135 such that the case lower part 123 of the sealing part 122 can be elevated in a stepped shape to a level higher than the lowermost outer surface of the pouch case 120.

A supporting member 161 is disposed between the positive terminal 135 and the pouch case 120 to support and fix the positive terminal 135 with respect to the pouch case 120. For example, the supporting member 161 may be formed of an insulating tape.

A coupling member 162 is disposed between the first lead tab 141 and the pouch case 120 so as to couple the first lead tab 141 to the inner surface of the pouch case 120. The coupling member 162 may be formed of a material having a high coupling strength such as polypropylene film or polyethylene film.

Although both the supporting member 161 and the coupling member 162 are described, only the coupling member 162 can be used if the positive terminal 135 is firmly coupled to the electrode assembly 130. If the positive terminal 135 is firmly coupled to the electrode assembly 130, when the secondary battery 110 swells, although the coupling member 162 causes the first lead tab 141 to be deformed together with the pouch case 120 in a manner such that the first lead tab 141 is spaced apart from the positive terminal 135, the supporting member 161 functions relatively less so that the supporting member 161 can be omitted.

An adhesive member 150 such as an insulating tape may be additionally disposed between the positive terminal 135 and the first lead tab 141. Both sides of the adhesive member 150 are respectively bonded to the surfaces of the positive terminal 135 and the lead tab 140 that face each other. The surfaces (main surfaces) of the positive terminal 135 and the first lead tab 141 that face each other may be spaced a predetermined distance from each other by the adhesive member 150. Owing to the adhesive member 150, structurally firm coupling (bonding) can be made between the positive terminal 135 and the first lead tab 141. Therefore, although the secondary battery 110 receives impacts or external forces during a normal operation, the possibility of disconnection of the connection part 145 can be reduced owing to the adhesive member 150. Therefore, during a normal operation of the electrode assembly 130, stable electric connection can be ensured between the electrode assembly 130 and an external circuit.

Insulating tapes 171 and 172 may be disposed between the opposite sides of the first lead tab 141 and the sealing part 122 of the pouch case 120. The insulating tapes 171 and 172 provide insulate the first lead tab 141 and the sealing part 122. Although only the connection structure between the positive terminal 135 and the first lead tab 141 is explained, a negative terminal, which is connected to the negative electrode plate 132 and extends in a manner corresponding to the second lead tab 142, may be connected to the second lead tab 142 in the same structure.

FIG. 4 is an exploded perspective view illustrating the connection part 45 of FIG. 3.

Referring to FIG. 4, a penetration hole 151 is formed through the adhesive member 150 which is disposed between the positive terminal 135 and the first lead tab 141. Except for a region of the adhesive member 150 where the penetration hole 151 is formed, the adhesive member 150 is bonded to the mutually facing surfaces of the positive terminal 135 and the first lead tab 141.

For spot welding, electrodes W1 and W2 may be disposed at regions of the positive terminal 135 and the first lead tab 141 corresponding to the penetration hole 151, that is, regions 135' and 141'. In detail, the first electrode W1 of which an end makes contact with the region 135' is aligned in a row with the second electrode W2 of which an end makes contact with the region 141', and the first and second electrodes W1 and W2 are pushed against the regions 135' and 141'. For a short time, a current is allowed to flow through the first and second electrodes W1 and W2 across the positive terminal 135 and the first lead tab 141, which generates Joule heat. Owing to this Joule heat, the mutually facing surfaces of the regions 135' and 141' of the positive terminal 135 and the first lead tab 141 are caused to fuse and adhere to each other. Then, as the adhered portions cool and harden to form the connection part 145.

A plurality of connection parts 145 can be formed (at different positions) by repeating spot welding. The coupling (welding) strength between the positive terminal 135 and the first lead tab 141 can be increased by increasing the number of spot welding processes.

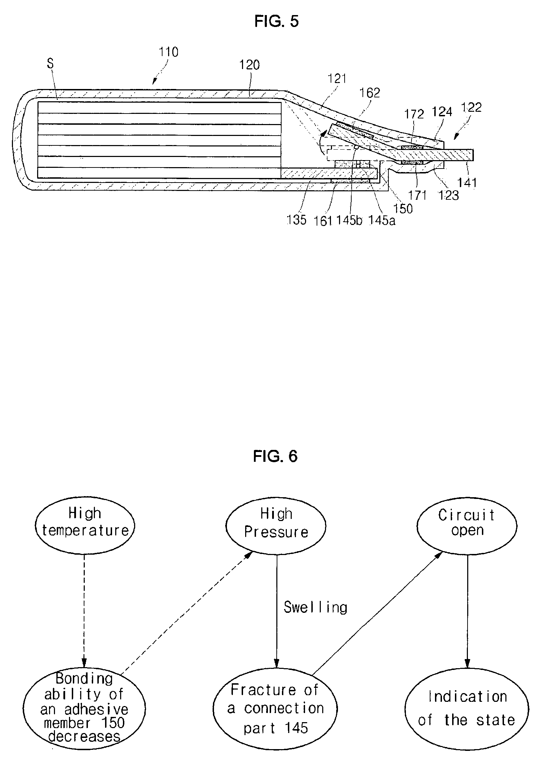

FIG. 5 is a sectional view for explaining variations of the secondary battery 110 illustrated in FIG. 3 when the secondary battery 110 swells, and FIG. 6 is a simplified schematic view illustrating the variations depicted in FIG. 5.

Referring to FIGS. 5 and 6, if the internal temperature of the secondary battery 110 increases and the internal gas pressure of the secondary battery 110 increases to a certain level due to extreme conditions such as overcharging and over-discharging, the pouch case 120 can swell, which is called a "swelling phenomenon." Both ends of the pouch case 120 in the length direction are mainly inflated, and particularly, the sloped surface 121 may expand most.

If the sloped surface 121 expands outward, an end part of the first lead tab 141, which is connected to the sloped surface 121 by the coupling member 162 and is located in the inner space (S), is also bent outward. Due to this deformation, the end of the first lead tab 141 is pulled away from the positive terminal 135. Thus, if the gas pressure exceeds a certain level, the first lead tab 141 may be separated from the positive terminal 135. Due to this separation, mainly, the connection part 145 may be split into two parts 145a and 146b.

As the two parts 145a and 145b are separated, the electric connection between the positive terminal 135 and the first lead tab 141 is structurally destroyed. That is, the electrode assembly 130 is electrically disconnected from an external circuit.

The fracture of the connection part 145 can occur according to the above-described mechanism when the fracture occurs before the coupling member 162 is separated from the pouch case 120 or the first lead tab 141. For this, the welding strength between the positive terminal 135 and the first lead tab 141 (the strength of the connection part 145) is lower than the bonding strength of the coupling member 162 to the pouch case 120 and the first lead tab 141. For example, if the former strength is 2.5 kgf or lower, the latter strength may be 3.0 kgf or higher. If the latter strength has the above-mentioned value, the coupling member 162 is not stripped although the coupling member 162 is pulled away from the pouch case 120 or the first lead tab 141 at a speed of 50 mm/min.

If any one of the plurality of secondary batteries 110 is disconnected from an external circuit, this will be detected through the detecting device 400 (refer to FIG. 1). Then, the circuit board 300 connected to the detecting device 400 may control the other secondary batteries 110 or report the malfunctioning of one of the secondary batteries 110. For this end, the circuit board 300 may include the display 310 (refer to FIG. 1) or a light emitting unit. In the example shown in FIG. 1, the display 310 indicates that No. 2 secondary battery 110 is malfunctioning.

In the case where the adhesive member 150 is used, the function of the adhesive member 150 related with fracture of the connection part 145 will now be described. When the temperature of the secondary battery 110 increases, heat is concentrated at the positive terminal 135 and the first lead tab 141. If heat is transferred to the adhesive member 150 from a part such as the positive terminal 135, the temperature of the adhesive member 150 increases and the bonding ability of the adhesive member 150 decreases. Thus, after a predetermined time from the start of malfunction of the secondary battery 110, the positive terminal 135 and the first lead tab 141 are not firmly coupled by the adhesive member 150. Unlike the case where the secondary battery 110 operates normally, when the secondary battery 110 operates abnormally, substantially, the adhesive member 150 cannot prevent separation of the positive terminal 135 and the first lead tab 141.

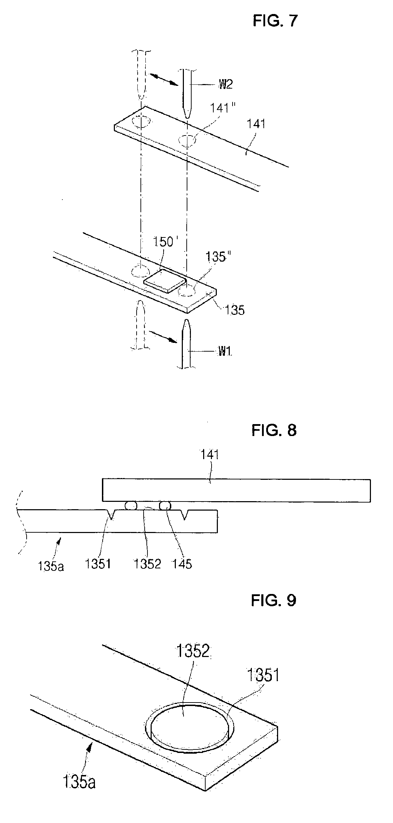

FIG. 7 is a perspective view for explaining a welding method between the positive terminal 135 and the first lead tab 141.

Referring to FIG. 7, unlike in relation to FIG. 4, a penetration hole is not formed through an adhesive member 150'. Instead, the adhesive member 150' is smaller than that illustrated in the previous arrangement and is bonded to the mutually facing surfaces of the positive terminal 135 and the first lead tab 141.

The adhesive member 150' is disposed at the center between the mutually facing parts of the positive terminal 135 and the first lead tab 141, such that both sides of the mutually facing parts can be used as welding regions 135" and 141". In the current arrangement, the welding regions 135" and 141" are located close to both sides of the adhesive member 150'.

In this structure, spot welding may be performed twice by using two electrodes W1 and W2. Then, the positive terminal 135 and the first lead tab 141 may be coupled to each other through two connection parts (refer to the connection part 145 of FIG. 3).

FIG. 8 is a sectional view illustrating a coupling structure between a positive terminal 135a and a first lead tab 141, and FIG. 9 is a perspective view illustrating the positive terminal 135a of FIG. 8.

Referring to FIGS. 8 and 9, like in the previously described arrangements, the positive terminal 135a and the first lead tab 141 are coupled to each other through connection parts 145 formed by welding. Further, like in the previous arrangements, an adhesive member 150 may be additionally disposed between the positive terminal 135a and the first lead tab 141.

Referring again to FIGS. 8 and 9, a groove 1351 is formed in the positive terminal 135. The groove 1351 may have a closed loop shape such as a circular shape as shown in FIG. 9. The connection parts 145 are disposed in a region 1352 defined by the groove 1351.

Although the connection parts 145 do not fracture during a swelling phenomenon, the positive terminal 135a and the first lead tab 141 can be separated from each other if the region 1352 of the positive terminal 135a defined by the groove 1351 is separated from the other region of the positive terminal 135a.

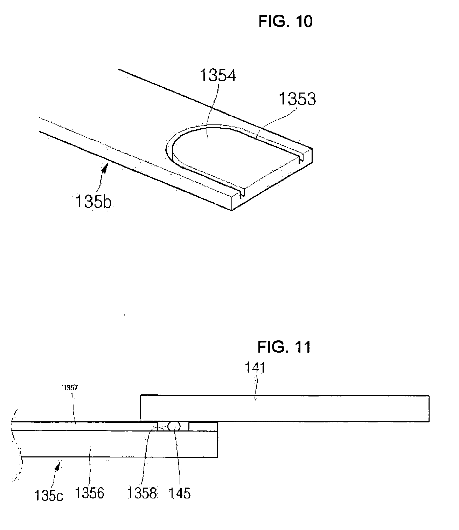

FIG. 10 is a perspective view illustrating a positive terminal 135b according to another arrangement.

Referring to FIG. 10, a groove 1353 has a non-closed-loop shape, and opened end parts of the groove 1353 extend to an end of a positive terminal 135b. A connection part may be located in a region 1354 defined by the groove 1353 and the end of the positive terminal 135b.

In this structure, the region 1354 may be separated from the other region of the positive terminal 135b more easily as compared with the case of the region 1352 of the previously described arrangement.

FIG. 11 is a sectional view illustrating a coupling structure between a positive terminal 135c and a first lead tab 141 according to an embodiment of the invention.

Referring to FIG. 11, the positive terminal 135c may have a cladding structure in which a first plate 1356 and a second plate 1357 are coupled to each other. The strength of the first plate 1356 is lower than that of the second plate 1357 but the electrical conductivity of the first plate 1356 is higher than that of the second plate 1357. The first lead tab 141 is connected to the first plate 1356 having higher electric conductivity through a connection part 145. The second plate 1357 enhances the overall rigidity of the positive terminal 135c.

The second plate 1357 has an opened region 1358 at the center of an end part. The connection part 145 is located in the region 1358.

Owing to this structure, the strength of the positive terminal 135c can be increased while maintaining the electrical conductivity of the positive terminal 135c. Therefore, when the first lead tab 141 is deformed, the positive terminal 135c may not be pulled by the first lead tab 141 but the positive terminal 135c may maintain its position. Thus, the first lead tab 141 can be separated from the positive terminal 135c more easily.

Furthermore, during a swelling phenomenon, a part of the positive terminal 135c corresponding to the first lead tab 141, the connection part 145, and the region 1358 may be separated from the other part of the positive terminal 135c more easily.

Exemplary embodiments have been disclosed herein, and although specific terms are employed, they are used and are to be interpreted in a generic and descriptive sense only and not for the purpose of limitation. Accordingly, it will be understood by those of ordinary skill in the art that various changes in form and details may be made without departing from the scope of the present invention as set out in the claims.

## Claims

1. A secondary battery, comprising:
an electrode assembly (130);
a case (120) for receiving the electrode assembly;
an electrode terminal (135, 135a, 135b, 135c) connected to the electrode assembly;
an electrode tab (141, 142) extending out of the case and connected to the electrode terminal by a conductive connection portion (145);
wherein the electrode tab (141, 142) is coupled to an inner wall of the case and is arranged to separate from the electrode terminal (135, 135a, 135b, 135c) if the case is deformed by an increase in gas pressure within the case,
wherein the electrode terminal (135c) has a first plate (1356) and a second plate (1357) coupled to each other, wherein the second plate (1357) has a higher strength than the first plate (1356) and the first plate (1356) has a higher conductivity than the second plate (1357), the second plate (1357) having an opening at which the electrode tab (141) is connected to the first plate (1356) via the connection portion (145).

2. The secondary battery of claim 1, wherein the case (120) has a sealing portion (122) for sealing the electrode tab (141, 142), wherein the electrode tab is coupled to the inner wall of the case between the electrode assembly and the sealing portion.

3. The secondary battery of claim 1 or 2, comprising a coupling member (162) for coupling the electrode tab to the wall of the case.

4. The secondary battery of claim 3, wherein the connection strength of the connection portion (145) is lower than the bonding strength of the coupling member (162).

5. The secondary battery of any one of the preceding claims, further comprising an adhesive portion (150, 150') between the electrode tab (141, 142) and the electrode terminal (135).

6. The secondary battery of claim 5, wherein the adhesive portion (150) comprises a hole (151), and the electrode tab and the electrode terminal are coupled so that the connection portion (145) is formed in the hole.

7. The secondary battery of any one of the preceding claims, wherein a second portion of the wall adjacent to a first portion at which the electrode tab is coupled to the wall comprises a sloping portion (121).

8. The secondary battery of any one of the preceding claims, wherein the electrode tab (141, 142) is coupled to the wall of the case at a first wall portion, the battery further comprising a support element (161) between the electrode terminal (135, 135a, 135b, 135c) and a wall portion opposite the first wall portion.

## Patentansprüche

1. Sekundärbatterie, umfassend:
eine Elektrodenanordnung (130);
ein Gehäuse (120) zum Aufnehmen der Elektrodenanordnung;
einen mit der Elektrodenanordnung verbundenen Elektrodenanschluss (135, 135a, 135b, 135c);
einen Elektrodenstreifen (141, 142), der sich aus dem Gehäuse heraus erstreckt und durch einen leitfähigen Verbindungsabschnitt (145) mit dem Elektrodenanschluss verbunden ist;
wobei der Elektrodenstreifen (141, 142) mit einer Innenwand des Gehäuses gekoppelt und so gestaltet ist, dass er sich vom Elektrodenanschluss (135, 135a, 135b, 135c) trennt, wenn das Gehäuse durch einen Anstieg des Gasdrucks innerhalb des Gehäuses verformt wird,
wobei der Elektrodenanschluss (135c) eine erste Platte (1356) und eine zweite Platte (1357) aufweist, die miteinander gekoppelt sind, wobei die zweite Platte (1357) eine höhere Festigkeit als die erste Platte (1356) aufweist, die erste Platte (1356) eine höhere Leitfähigkeit als die zweite Platte (1357) aufweist und die zweite Platte (1357) eine Öffnung aufweist, an welcher der Elektrodenstreifen (141) über den Verbindungsabschnitt(145) mit der ersten Platte (1356) verbunden ist.

2. Sekundärbatterie nach Anspruch 1, wobei das Gehäuse (120) einen Dichtungsabschnitt (122) zum Abdichten des Elektrodenstreifens (141, 142) aufweist, wobei der Elektrodenstreifen zwischen der Elektrodenanordnung und dem Dichtungsabschnitt mit der Innenwand des Gehäuses gekoppelt ist.

3. Sekundärbatterie nach Anspruch 1 oder 2, umfassend ein Kopplungsglied (162) zum Koppeln des Elektrodenstreifens mit der Gehäusewand.

4. Sekundärbatterie nach Anspruch 3, wobei die Verbindungsfestigkeit des Verbindungsabschnitts (145) geringer als die Haftfestigkeit des Kopplungsglieds (162) ist.

5. Sekundärbatterie nach einem der vorangehenden Ansprüche, ferner umfassend einen Klebeabschnitt (150, 150') zwischen dem Elektrodenstreifen (141, 142) und dem Elektrodenanschluss (135) aufweist.

6. Sekundärbatterie nach Anspruch 5, wobei der Klebeabschnitt (150) ein Loch (151) aufweist und der Elektrodenstreifen und der Elektrodenanschluss so gekoppelt sind, dass der Verbindungsabschnitt (145) im Loch ausgebildet ist.

7. Sekundärbatterie nach einem der vorangehenden Ansprüche, wobei ein zum ersten Abschnitt, an dem der Elektrodenstreifen mit der Wand gekoppelt ist, benachbarter zweiter Wandabschnitt der Wand einen schrägen Abschnitt (121) aufweist.

8. Sekundärbatterie nach einem der vorangehenden Ansprüche, wobei der Elektrodenstreifen (141, 142) an einem ersten Wandabschnitt mit der Gehäusewand gekoppelt ist, wobei die Batterie ferner ein Stützbauteil (161) zwischen dem Elektrodenanschluss (135, 135a, 135b, 135c) und einem dem ersten Wandabschnitt gegenüberliegenden Wandabschnitt aufweist.

## Revendications

1. Batterie secondaire, comprenant :
un ensemble d'électrodes (130) ;
un boîtier (120) pour recevoir l'ensemble d'électrodes ;
une borne d'électrode (135, 135a, 135b, 135c) connectée à l'ensemble d'électrodes ;
une languette d'électrode (141, 142) s'étendant hors du boîtier et connectée à la borne d'électrode par une partie de connexion conductrice (145) ;
dans laquelle la languette d'électrode (141, 142) est couplée à une paroi intérieure du boîtier et est agencée pour se séparer de la borne d'électrode (135, 135a, 135b, 135c) si le boîtier est déformé par une augmentation de pression de gaz à l'intérieur du boîtier,
dans laquelle la borne d'électrode (135c) a une première plaque (1356) et une seconde plaque (1357) couplées l'une à l'autre, où la seconde plaque (1357) a une force supérieure à la première plaque (1356) et la première plaque (1356) a une conductivité supérieure à la seconde plaque (1357), la seconde plaque (1357) ayant une ouverture au niveau de laquelle la languette d'électrode (141) est connectée à la première plaque (1356) par l'intermédiaire de la partie de connexion (145).

2. Batterie secondaire selon la revendication 1, dans laquelle le boîtier (120) a une partie de scellement (122) pour sceller la languette d'électrode (141, 142), dans laquelle la languette d'électrode est couplée à la paroi intérieure du boîtier entre l'ensemble d'électrodes et la partie de scellement.

3. Batterie secondaire selon la revendication 1 ou 2, comprenant un élément de couplage (162) pour coupler la languette d'électrode à la paroi du boîtier.

4. Batterie secondaire selon la revendication 3, dans laquelle la force de connexion de la partie de connexion (145) est inférieure à la force de liaison de l'élément de couplage (162).

5. Batterie secondaire selon l'une quelconque des revendications précédentes, comprenant en outre une partie adhésive (150, 150') entre la languette d'électrode (141, 142) et la borne d'électrode (135).

6. Batterie secondaire selon la revendication 5, dans laquelle la partie adhésive (150) comprend un trou (151), et la languette d'électrode et la borne d'électrode sont couplées de sorte que la partie de connexion (145) soit formée dans le trou.

7. Batterie secondaire selon l'une quelconque des revendications précédentes, dans laquelle une seconde partie de la paroi adjacente à une première partie au niveau de laquelle la languette d'électrode est couplée à la paroi comprend une partie inclinée (121).

8. Batterie secondaire selon l'une quelconque des revendications précédentes, dans laquelle la languette d'électrode (141, 142) est couplée à la paroi du boîtier au niveau d'une première partie de paroi, la batterie comprenant en outre un élément de support (161) entre la borne d'électrode (135, 135a, 135b, 135c) et une partie de paroi opposée à la première partie de paroi.
